Europäisches Patentamt

European Patent Office

Office européen des brevets

(19)

(11) **EP 0 946 266 B1**

(12) **FASCICULE DE BREVET EUROPEEN**

(45) Date de publication et mention
de la délivrance du brevet:
**26.03.2003 Bulletin 2003/13**

(21) Numéro de dépôt: **97952105.1**

(22) Date de dépôt: **18.12.1997**

(51) Int Cl.[7]: **B01D 53/94**, B01J 23/10

(86) Numéro de dépôt international:
**PCT/FR97/02351**

(87) Numéro de publication internationale:
**WO 98/028063 (02.07.1998 Gazette 1998/26)**

(54) **PROCEDE DE TRAITEMENT DE GAZ D'ECHAPPEMENT DE MOTEURS A COMBUSTION INTERNE FONCTIONNANT AVEC UN CARBURANT CONTENANT DU SOUFRE**

VERFAHREN ZUR BEHANDLUNG DER ABGASE EINES VERBRENNUNGSMOTORS, DER MIT SCHWEFELHALTIGEM BRENNSTOFF ARBEITET

METHOD FOR TREATING EXHAUST GAS OF INTERNAL COMBUSTION ENGINES FUNCTIONING WITH SULPHUR-CONTAINING FUEL

(84) Etats contractants désignés:
**AT BE CH DE ES FI FR GB GR IT LI NL SE**

(30) Priorité: **23.12.1996 FR 9615836**

(43) Date de publication de la demande:
**06.10.1999 Bulletin 1999/40**

(73) Titulaire: **RHODIA CHIMIE**
**92408 Courbevoie Cédex (FR)**

(72) Inventeurs:
• **BLANCHARD, Gilbert**
**F-60330 Lagny-le-Sec (FR)**

• **VISCIGLIO, Valérie**
**F-75016 Paris (FR)**

(74) Mandataire: **Dubruc, Philippe et al**
**Rhodia Services,**
**Direction de la Propriété Industrielle,**
**40, rue de la Haie-Coq**
**93306 Aubervilliers Cedex (FR)**

(56) Documents cités:
**EP-A- 0 385 123    EP-A- 0 525 677**
**EP-A- 0 605 274    EP-A- 0 611 192**
**WO-A-96/21506     WO-A-97/30777**
**DE-A- 3 913 972    FR-A- 2 570 087**
**US-A- 4 868 148    US-A- 5 672 557**

**Description**

La présente invention concerne un procédé de traitement de gaz d'échappement de moteurs à combustion interne fonctionnant avec un carburant contenant du soufre.

On utilise à l'heure actuelle pour le traitement des gaz d'échappement des moteurs à combustion interne (catalyse postcombustion automobile) des catalyseurs dits multifonctionnels, par exemple dans les documents EP-A-0 605 274 et EP-A-0 611 192 . Par multifonctionnels, on entend les catalyseurs capables d'opérer non seulement l'oxydation en particulier du monoxyde de carbone et des hydrocarbures présents dans les gaz d'échappement mais également la réduction en particulier des oxydes d'azote également présents dans ces gaz (catalyseurs "trois voies"). L'oxyde de zirconium et l'oxyde de cérium apparaissent aujourd'hui comme deux constituants particulièrement importants et intéressants pour ce type de catalyseurs.

Pour être efficaces, ces catalyseurs doivent présenter tout d'abord une surface spécifique importante même à température élevée. En outre, on sait que le cérium permet d'assurer un pouvoir tampon vis à vis des variations de la teneur en oxygène du mélange gazeux à traiter et ainsi d'améliorer les performances du catalyseur à l'égard des trois principaux polluants que sont le CO, HC et les NOx. Ce pouvoir tampon est évalué par la capacité à stocker l'oxygène en milieu oxydant et à le restituer en milieu réducteur. Or, cette capacité de stockage de l'oxygène diminue fortement lorsque le catalyseur fonctionne dans un milieu contenant des composés soufrés. C'est ainsi que certains catalyseurs peuvent se révéler inefficaces lorsqu'ils sont utilisés dans le traitement de gaz d'échappement de moteurs fonctionnant avec des carburants chargés en composés soufrés.

L'objet de l'invention est donc la mise au point de compositions catalytiques utilisables pour la préparation de systèmes catalytiques destinés au traitement de gaz d'échappement de moteurs fonctionnant avec de tels carburants et dont la capacité de stockage de l'oxygène reste à une valeur acceptable dans le cas de l'utilisation dans de telles conditions.

Dans ce but, l'invention concerne l'utilisation dans la préparation d'un système catalytique pour le traitement de gaz d'échappement de moteurs à combustion interne fonctionnant avec un carburant contenant du soufre, pour la stabilisation de la capacité de stockage d'oxygène dudit système vis à vis du soufre, d'une composition à base d'un oxyde de cérium et d'un oxyde de zirconium, dans une proportion atomique cérium/zirconium d'au moins 1, et d'au moins un oxyde choisi parmi l'oxyde de praséodyme et l'oxyde de lanthane et qui présente une surface spécifique après calcination 6 heures à 900°C d'au moins 40m$^2$/g.

D'autres caractéristiques, détails et avantages de l'invention apparaîtront encore plus complètement à la lecture de la description qui va suivre, ainsi que des divers exemples concrets mais non limitatifs destinés à l'illustrer.

Les compositions utilisables dans le cadre de l'invention vont maintenant être décrites.

Ces compositions sont à base d'un oxyde de cérium et d'un oxyde de zirconium et d'au moins un oxyde choisi parmi l'oxyde d'yttrium, de lanthane et de praséodyme. La proportion atomique cérium/zirconium est d'au moins 1.

Les compositions de l'invention peuvent répondre à la formule $Ce_xZr_yM_zO_2$ dans laquelle M représente au moins un élément choisi dans le groupe comprenant l'yttrium, le lanthane et le praséodyme. Dans cette formule, z est supérieur à 0 et présente de préférence une valeur d'au plus 0,3 et qui peut être plus particulièrement comprise entre 0,02 et 0,2. Le rapport x/y peut être compris entre 1 et 19, plus particulièrement entre 1 et 9 et encore plus particulièrement entre 1,5 et 4, les valeurs des bornes autres que 0 étant incluses et x, y et z étant liés par la relation x+y+z=1.

Une autre caractéristique des compositions de l'invention est leur surface spécifique. Ainsi, elles présentent une surface spécifique après calcination 6 heures à 900°C d'au moins 40m$^2$/g. Elle peut être encore plus particulièrement d'au moins 45m$^2$/g.

Les compositions de l'invention peuvent aussi présenter des surfaces qui restent encore importantes même après calcination 6 heures à 1000°C. Ces surfaces peuvent être d'au moins 14m$^2$/g, plus particulièrement d'au moins 20m$^2$/g et encore plus particulièrement d'au moins 30m$^2$/g.

Les compositions de l'invention peuvent se présenter avantageusement sous forme d'une solution solide. Les spectres en diffraction X de ces compositions révèlent en effet, au sein de ces dernières, l'existence d'une seule phase homogène. Pour les compositions les plus riches en cérium, cette phase correspond en fait à celle d'un oxyde cérique $CeO_2$ cristallisé et dont les paramètres de mailles sont plus ou moins décalés par rapport à un oxyde cérique pur, traduisant ainsi l'incorporation du zirconium et, le cas échéant, de l'autre élément dans le réseau cristallin de l'oxyde de cérium, et donc l'obtention d'une solution solide vraie.

Le procédé de préparation des compositions décrites plus haut va maintenant être décrit.

La première étape du procédé selon l'invention consiste à préparer un mélange en milieu liquide, généralement en phase aqueuse, contenant au moins un composé de cérium, au moins un composé de zirconium et au moins un composé de l'yttrium, du lanthane ou du praséodyme. Ce mélange est préparé en utilisant une solution de zirconium.

Cette solution de zirconium peut provenir de l'attaque acide d'un réactif comprenant du zirconium. Comme réactif approprié, on peut citer le carbonate, l'hydroxyde ou l'oxyde de zirconium. L'attaque peut être faite avec un acide inorganique comme l'acide nitrique, l'acide chlorhydrique ou l'acide sulfurique. L'acide nitrique est l'acide préféré, et on peut mentionner ainsi tout particulièrement l'utilisation d'un nitrate de zirconyle provenant de l'attaque nitrique d'un carbonate de zirconium. Ce peut être aussi un acide organique tel que l'acide acétique ou l'acide citrique.

Selon l'invention, cette solution de zirconium doit présenter la caractéristique suivante. La quantité de base nécessaire pour atteindre le point équivalent lors d'un dosage acide-base de cette solution doit vérifier la condition rapport molaire $OH^-/Zr \leq 1{,}65$. Plus particulièrement, ce rapport peut être d'au plus 1,5 et encore plus particulièrement d'au plus 1,3. Généralement, la surface spécifique de la composition obtenue a tendance à augmenter lorsque ce rapport décroît.

Le dosage acide-base se fait d'une manière connue. Pour l'effectuer dans des conditions optimales, on peut doser une solution qui a été amenée à une concentration d'environ $3.10^{-2}$ mole par litre exprimée en élément zirconium. On y ajoute sous agitation une solution de soude 1N. Dans ces conditions, la détermination du point équivalent (changement du pH de la solution) se fait d'une manière nette. On exprime ce point équivalent par le rapport molaire $OH^-/Zr$.

A titre de composés du cérium, on peut citer notamment les sels de cérium comme les sels de cérium IV tels que nitrates ou nitrates céri-ammoniacal par exemple, qui conviennent ici particulièrement bien. De préférence, on utilise du nitrate cérique. La solution de sels de cérium IV peut contenir du cérium à l'état céreux mais il est préférable qu'elle contienne au moins 85% de cérium IV. Une solution aqueuse de nitrate cérique peut par exemple être obtenue par réaction de l'acide nitrique sur un oxyde cérique hydraté préparé d'une manière classique par réaction d'une solution d'un sel céreux, par exemple le nitrate céreux, et d'une solution d'ammoniaque en présence d'eau oxygénée. On peut également utiliser une solution de nitrate cérique obtenue selon le procédé d'oxydation électrolytique d'une solution de nitrate céreux tel que décrit dans le document FR-A- 2 570 087, et qui peut constituer une matière première intéressante.

On notera ici que la solution aqueuse de sels de cérium IV peut présenter une certaine acidité libre initiale, par exemple une normalité variant entre 0,1 et 4 N. Selon la présente invention, il est autant possible de mettre en oeuvre une solution initiale de sels de cérium IV présentant effectivement une certaine acidité libre comme mentionné ci-dessus, qu'une solution qui aura été préalablement neutralisée de façon plus ou moins poussée par ajout d'une base, telle que par exemple une solution d'ammoniaque ou encore d'hydroxydes d'alcalins (sodium, potassium,...), mais de préférence une solution d'ammoniaque, de manière à limiter cette acidité. On peut alors, dans ce dernier cas, définir de manière pratique un taux de neutralisation (r) de la solution initiale de cérium par l'équation suivante :

$$r = \frac{n3 - n2}{n1}$$

dans laquelle n1 représente le nombre total de moles de Ce IV présentes dans la solution après neutralisation; n2 représente le nombre de moles d'ions $OH^-$ effectivement nécessaires pour neutraliser l'acidité libre initiale apportée par la solution aqueuse de sel de cérium IV; et n3 représente le nombre total de moles d'ions $OH^-$ apportées par l'addition de la base. Lorsque la variante "neutralisation" est mise en oeuvre, on utilise dans tous les cas une quantité de base qui doit être impérativement inférieure à la quantité de base qui serait nécessaire pour obtenir la précipitation totale de l'espèce hydroxyde $Ce(OH)_4$ (r=4). Dans la pratique, on se limite ainsi à des taux de neutralisation n'excédant pas 1, et de préférence encore n'excédant pas 0,5.

Les composés de l'yttrium, du lanthane ou du praséodyme sont de préférence des composés solubles dans l'eau notamment.

A titre de composés de l'yttrium, du lanthane ou du praséodyme utilisables dans le procédé de l'invention, on peut par exemple citer les sels d'acides inorganiques ou organiques, par exemple du type sulfate, nitrate, chlorure ou acétate. On notera que le nitrate convient particulièrement bien. Ces composés peuvent aussi être apportés sous forme de sols. Ces sols peuvent être obtenus par exemple par neutralisation par une base d'un sel de ces composés.

Les quantités de cérium, de zirconium et d'yttrium, de lanthane ou de praséodyme présentes dans le mélange doivent correspondre aux proportions stoechiométriques requises pour l'obtention de la composition finale désirée.

Le mélange initial étant ainsi obtenu, on procède ensuite, conformément à la deuxième étape du procédé selon l'invention, à son chauffage.

La température à laquelle est menée ce traitement thermique, aussi appelé thermohydrolyse, peut être comprise entre 80°C et la température critique du milieu réactionnel en particulier entre 80 et 350°C, de préférence entre 90 et 200°C.

Ce traitement peut être conduit, selon les conditions de températures retenues, soit sous pression normale atmosphérique, soit sous pression telle que par exemple la pression de vapeur saturante correspondant à la température du traitement thermique. Lorsque la température de traitement est choisie supérieure à la température de reflux du mélange réactionnel (c'est à dire généralement supérieure à 100°C), par exemple choisie entre 150 et 350°C, on conduit alors l'opération en introduisant le mélange aqueux contenant les espèces précitées dans une enceinte close (réacteur fermé plus couramment appelé autoclave), la pression nécessaire ne résultant alors que du seul chauffage du milieu réactionnel (pression autogène). Dans les conditions de températures données ci-dessus, et en milieux aqueux, on peut ainsi préciser, à titre illustratif, que la pression dans le réacteur fermé varie entre une valeur supérieure à 1 Bar ($10^5$ Pa) et 165 Bar (165. $10^5$ Pa), de préférence entre 5 Bar (5. $10^5$ Pa) et 165 Bar (165. $10^5$ Pa). Il est bien entendu également possible d'exercer une pression extérieure qui s'ajoute alors à celle consécutive au chauffage.

Le chauffage peut être conduit soit sous atmosphère d'air, soit sous atmosphère de gaz inerte, de préférence l'azote.

La durée du traitement n'est pas critique, et peut ainsi varier dans de larges limites, par exemple entre 1 et 48 heures, de préférence entre 2 et 24 heures.

A l'issue de l'étape de chauffage, on récupère un précipité solide qui peut être séparé de son milieu par toute technique classique de séparation solide-liquide telle que par exemple filtration, décantation, essorage ou centrifugation .

Il peut être avantageux d'introduire après l'étape de chauffage, une base telle que par exemple une solution d'ammoniaque, dans le milieu de précipitation. Ceci permet d'augmenter les rendements de récupération en l'espèce précipitée.

Il est aussi possible d'ajouter de la même façon, après l'étape de chauffage, de l'eau oxygénée.

Le produit tel que récupéré peut ensuite être soumis à des lavages à l'eau et/ou à l'ammoniaque, à une température comprise entre la température ambiante et la température d'ébullition. Pour éliminer l'eau résiduelle, le produit lavé peut enfin, éventuellement, être séché, par exemple à l'air, et ceci à une température qui peut varier entre 80 et 300°C, de préférence entre 100 et 150°C, le séchage étant poursuivi jusqu'à l'obtention d'un poids constant.

On notera qu'il est bien entendu possible de répéter une ou plusieurs fois, à l'identique ou non, après récupération du produit et addition éventuelle de la base ou de l'eau oxygénée, une étape de chauffage telle que décrite ci-dessus, en remettant alors le produit en milieu liquide, notamment dans l'eau, et en effectuant par exemple des cycles de traitements thermiques.

Dans une dernière étape du procédé, le précipité récupéré, après éventuellement lavage et/ou séchage, est ensuite calciné. Selon un mode de réalisation particulier, il est possible après le traitement de thermohydrolyse et éventuellement après remise du produit en milieu liquide et un traitement supplémentaire de sécher directement le milieu réactionnel obtenu par atomisation.

La calcination est effectuée à une température comprise généralement entre 200 et 1200°C et de préférence entre 300 et 900°C. Cette température de calcination doit être suffisante pour transformer les précurseurs en oxydes, et elle est aussi choisie en fonction de la température d'utilisation ultérieure de la composition catalytique et en tenant compte du fait que la surface spécifique du produit est d'autant plus faible que la température de calcination mise en oeuvre est plus élevée. La durée de la calcination peut quant à elle varier dans de larges limites, par exemple entre 1 et 24 heures, de préférence entre 4 et 10 heures. La calcination est généralement opérée sous air, mais une calcination menée par exemple sous gaz inerte n'est bien évidemment pas exclue.

Les compositions telles que décrites plus haut ou telles qu'obtenues dans les procédés mentionnés précédemment se présentent sous forme de poudres mais elles peuvent éventuellement être mises en forme pour se présenter sous forme de granulés, billes, cylindres ou nids d'abeille de dimensions variables. Ces compositions peuvent être appliquées sur tout support utilisé habituellement dans le domaine de la catalyse, c'est à dire notamment des substrats ou supports inertes thermiquement. Ce support peut être choisi parmi l'alumine, l'oxyde de titane, l'oxyde de cérium, l'oxyde de zirconium, la silice, les spinelles, les zéolites, les silicates, les phosphates de silicoaluminium cristallins, les phosphates d'aluminium cristallins. Les compositions peuvent aussi être utilisées dans des systèmes catalytiques comprenant un revêtement (wash coat) à propriétés catalytiques et à base de ces compositions, sur un substrat du type par exemple monolithe métallique ou en céramique. Le revêtement peut comporter lui aussi un support du type de ceux mentionnés plus haut. Ce revêtement est obtenu par mélange de la composition avec le support de manière à former une suspension qui peut être ensuite déposée sur le substrat.

Les compositions de l'invention peuvent être employées en combinaison avec des métaux précieux. La nature de ces métaux et les techniques d'incorporation de ceux-ci dans ces compositions sont bien connues de l'homme du métier. Par exemple, les métaux peuvent être le platine, le rhodium, le palladium ou l'iridium, ils peuvent notamment être incorporés aux compositions par imprégnation.

Les compositions de l'invention sont particulièrement utiles dans le traitement des gaz d'échappement de moteurs à combustion interne fonctionnant avec un carburant contenant du soufre, c'est à dire pour des carburants dont la teneur en soufre est d'au moins 30ppm, plus particulièrement d'au moins 50ppm et encore plus particulièrement d'au moins 200ppm (teneur exprimée en élément soufre). Le terme soufre doit être pris au sens large, c'est à dire comme désignant le soufre mais aussi les composés soufrés qui sont présents dans les carburants. On observe, en effet, que généralement les compositions de l'invention, utilisées en combinaison avec les métaux précieux du type décrits plus haut et dans les conditions de test données ci-dessous, présentent une capacité de stockage d'oxygène d'au moins 4.5ml$O_2$/g, plus particulièrement d'au moins 5ml$O_2$/g, et qu'elles ne subissent qu'une diminution d'au plus 20% de cette capacité après un traitement thermique en présence de soufre ce qui est inférieur aux diminutions que présentent les catalyseurs connus.

Des exemples vont maintenant être donnés. Les exemples 1 à 4 décrivent la préparation des produits.

EXEMPLE 1

Cet exemple concerne un oxyde mixte de formule $Ce_{0,645}Zr_{0,30}Y_{0,055}$.

Dans les proportions stoechiométriques requises pour l'obtention de l'oxyde mixte ci-dessus, on mélange une solution de nitrate cérique préneutralisée par ajout de $NH_4OH$ tel que r=- 0,22 (r étant tel que défini précédemment), une solution de nitrate d'yttrium et une solution de nitrate de zirconyle qui répond, au sens défini plus haut, à la condition rapport molaire $OH^-/Zr$ = 1,17.

La concentration de ce mélange (exprimée en oxyde des différents éléments) est ajustée à 80 g/l. Ce mélange est ensuite porté à 150°C pendant 4 heures.

Une solution d'ammoniaque est ensuite ajoutée au milieu réactionnel de telle sorte que le pH soit supérieur à 8,5. Le milieu réactionnel ainsi obtenu est porté à ébullition pendant 2 heures. Après décantation puis soutirage, on remet en suspension le produit solide et le milieu ainsi obtenu est traité pendant 1 heure à 100°C. Le milieu réactionnel ainsi obtenu est séché par atomisation. Une partie du produit séché est calcinée à 900°C, 6 heures. Le produit calciné obtenu présente alors une surface de 47m$^2$/g.

EXAMPLE 2

Cet exemple concerne un oxyde mixte de formule $Ce_{0,65}Zr_{0,31}La_{0,04}O_2$.

Le mélange des solutions et le mode opératoire suivi sont les mêmes que dans l'exemple 1, le nitrate d'yttrium étant remplacé par du nitrate de lanthane. Le produit obtenu après calcination à 900°C, 6 heures, présente une surface de 44m$^2$/g.

EXEMPLE 3

Cet exemple concerne un oxyde mixte de formule $Ce_{0,66}Zr_{0,30}Pr_{0,04}O_2$.

Le mélange des solutions et le mode opératoire suivi sont les mêmes que dans l'exemple 1, le nitrate d'yttrium étant remplacé par du nitrate de praséodyme. Le produit obtenu après calcination à 900°C, 6 heures, présente une surface de 40m$^2$/g.

EXEMPLE 4 COMPARATIF

Cet exemple concerne un oxyde mixte de formule $Ce_{0,62}Zr_{0,38}O_2$.

Dans les proportions stoechiométriques requises pour l'obtention de l'oxyde mixte ci-dessus, on mélange une solution de nitrate cérique et une solution de nitrate de zirconyle. Cette dernière a été obtenue par attaque d'un carbonate à l'aide d'acide nitrique concentré. La solution répond, au sens défini plus haut, à la condition rapport molaire $OH^-/Zr$ = 0,94.

La concentration de ce mélange (exprimée en oxyde des différents éléments) est ajustée à 80 g/l. Ce mélange est ensuite porté à 150°C pendant 4 heures.

Une solution d'ammoniaque est ensuite ajoutée au milieu réactionnel de telle sorte que le pH soit supérieur à 8,5. Le milieu réactionnel ainsi obtenu est porté à ébullition pendant 2 heures. Après décantation puis soutirage, on remet en suspension le produit solide et le milieu ainsi obtenu est traité pendant 1 heure à 100°C. Le produit est ensuite filtré. Une partie du produit obtenu après filtration est calcinée à 900°C, 6 heures. Il présente alors une surface de 39m$^2$/g.

EXEMPLE 5

Cet exemple décrit la mesure de la capacité de stockage d'oxygène des produits obtenus selon les modes opératoires donnés dans les exemples 1 à 4.

Préparation des produits

L'autre partie du produit obtenue à l'issue des étapes de séchage des exemptes 1 à 3 et de l'étape de filtration de l'exemple 4 est calcinée à 650°C, 2 heures. On procède ensuite au dépôt de platine sur le produit calciné de la manière suivante.

100ml d'une solution d'acide hexachloroplatinique contenant 0,05g de platine sont introduit dans un bêcher. Sous agitation, on ajoute 10g du produit calciné précédent. Après 3 heures d'agitation, le solide est séparé de la solution par centrifugation pendant 15 minutes. Le produit imprégné de platine est ensuite séché à 120°C pendant 12 heures puis calciné à 480°C pendant 5 heures. Les produits obtenus présentent une teneur en platine de 0,5% en poids de métal par rapport à l'oxyde.

La détermination de la capacité de stockage de l'oxygène se fait sur des produits vieillis. Ainsi, les produits imprégnés sont traités à 900°C pendant 6 heures sous atmosphère alternée oxydo/réductrice en présence de 10% d'eau puis, dans un second temps, à 450°C pendant 6 heures sous atmosphère alternée oxydo/réductrice en présence de 10% d'eau et en présence ou non de dioxyde de soufre (150ppm) en atmosphère oxydante.

Description du test permettant de quantifier le stockage de l'oxygène

Le pouvoir tampon d'une composition vis-à-vis de l'oxygène est évalué par sa capacité à stocker l'oxygène en milieu oxydant et à le restituer en milieu réducteur. Le test évalue la capacité de la composition à successivement oxyder des pulses de monoxyde de carbone d'oxygène et à consommer des pulses d'oxygène pour réoxyder la composition. La méthode employée est dite alternée.

Le gaz porteur est de l'hélium pur à un débit de 10l/h. Les injections se font par l'intermédiaire de boucle contenant 16ml de gaz. Les pulses de CO sont effectués en utilisant un mélange gazeux contenant 5% de CO dilué dans l'hélium tandis que les pulses d'$O_2$ se font à partir d'un mélange gazeux contenant 2,5% d'$O_2$ dilué dans l'hélium. L'analyse des gaz est effectuée par chromatographie à l'aide d'un détecteur de conductivité thermique.

La quantité d'oxygène consommée ou la proportion de CO transformée permet de déterminer la capacité de stockage d'oxygène (OSC) exprimée en $mlO_2/g$. Les mesures de pouvoir de stockage d'oxygène sont effectuées à 400°C sur des oxydes imprégnés et vieillis selon la méthode qui a été donnée ci-dessus. La variation du pouvoir de stockage d'oxygène est exprimée suivant la formule suivante:

$$\Delta = 100(OSC_1 - OSC_2)/OSC_1$$

dans laquelle $OSC_1$ représente l'OSC après traitement thermique en absence de soufre et $OSC_2$ représente l'OSC après traitement thermique en présence de soufre.

Les résultats sur la capacité de stockage de l'oxygène sont donnés dans le tableau qui suit . Les produits 1 à 4 correspondent aux produits préparés de la manière qui a été décrite dans l'exemple 5 et issus des modes opératoires des exemples 1 à 4 respectivement.

| Produits | $OSC_1$ 0ppm $SO_2$ | $OSC_2$ 150ppm $SO_2$ | $\Delta$ |
|---|---|---|---|
| 1 | 6 | 4,9 | 18 |
| 2 | 7,5 | 6,5 | 13 |
| 3 | 5,6 | 5,0 | 12 |
| 4 (comparatif) | 7,8 | 4,3 | 45 |

**Revendications**

1. Utilisation dans la préparation d'un système catalytique pour le traitement de gaz d'échappement de moteurs à combustion interne fonctionnant avec un carburant contenant du soufre, pour la stabilisation de la capacité de stockage d'oxygène dudit système vis à vis du soufre, d'une composition à base d'un oxyde de cérium et d'un oxyde de zirconium, dans une proportion atomique cérium/zirconium d'au moins 1, et d'au moins un oxyde choisi parmi l'oxyde de praséodyme et l'oxyde de lanthane et qui présente une surface spécifique après calcination 6 heures à 900°C d'au moins $40m^2/g$.

2. Utilisation selon la revendication 1, **caractérisée en ce que** la composition présente une surface spécifique après calcination 6 heures à 900°C d'au moins $45m^2/g$.

3. Utilisation selon l'une des revendications précédentes, **caractérisée en ce que** la composition présente une surface spécifique après calcination 6 heures à 1000°C d'au moins $14m^2/g$ et plus particulièrement d'au moins $20m^2/g$ et encore plus particulièrement d'au moins $30m^2/g$.

4.  Utilisation selon l'une des revendications précédentes, **caractérisée en ce que** la composition répond à la formule $Ce_xZr_yM_zO_2$ où M représente au moins un élément choisi dans le groupe comprenant le lanthane et le praséodyme et où z est supérieur à 0 et est compris entre 0 et 0,3 et plus particulièrement entre 0,02 et 0,2, et le rapport x/y est compris entre 1 et 19, plus particulièrement entre 1 et 9 et encore plus particulièrement entre 1,5 et 4, les valeurs des bornes autres que 0 étant incluses et x, y et z étant liés par la relation x+y+z=1.

5.  Utilisation selon l'une des revendications précédentes, **caractérisée en ce que** la composition se présente sous forme d'une solution solide.

6.  Utilisation selon l'une des revendications précédentes, **caractérisée en ce que** la composition est obtenue par un procédé dans lequel on prépare un mélange en milieu liquide contenant un composé du cérium, un composé du zirconium et un composé de lanthane ou de praséodyme; on chauffe ledit mélange; on récupère le précipité obtenu et on calcine ce précipité; et dans lequel on utilise, pour préparer le mélange précité, une solution de zirconium qui est telle que la quantité de base nécessaire pour atteindre le point équivalent lors d'un dosage acide-base de cette solution vérifie la condition rapport molaire $OH^-/Zr \leq 1{,}65$ plus particulièrement $\leq 1{,}5$.


**Claims**

1.  Use of a composition based on a cerium oxide and a zirconium oxide in a cerium/zirconium atomic proportion of at least 1, and at least one oxide selected from praseodymium oxide and lanthanum oxide, having a specific surface area of at least 40 $m^2/g$ after calcining for 6 hours at 900°C, in preparing a catalytic system for treating exhaust gas from internal combustion engines functioning with a sulphur-containing fuel in order to stabilise the oxygen storage capacity of said system as regards sulphur.

2.  Use according to claim 1, **characterized in that** the composition has a specific surface area of at least 45 $m^2/g$ after calcining for 6 hours at 900°C.

3.  Use according to one of the preceding claims, **characterized in that** the composition has a specific surface area of at least 14 $m^2/g$, more particularly at least 20 $m^2/g$ and still more particularly at least 30 $m^2/g$ after calcining for 6 hours at 1000°C.

4.  Use according to one of the preceding claims, **characterized in that** the composition has formula $Ce_xZr_yM_2O_2$, in which M represents at least one element selected from the group formed by lanthanum and praseodymium and in which z is more than 0 and in the range 0 to 0.3, more particularly in the range 0.02 to 0.2, and wherein the ratio x/y is in the range 1 to 19, more particularly in the range 1 to 9 and still more particularly in the range 1.5 to 4, the values for the limits other than 0 being included and x, y and z being connected by the relationship x + y + z = 1.

5.  Use according to one of the preceding claims, **characterized in that** the composition is in the form of a solid solution.

6.  Use according to one of the preceding claims, **characterized in that** the composition is obtained by a process in which a mixture containing a cerium compound, a zirconium compound and a lanthanum or praseodymium compound is prepared in a liquid medium; said mixture is heated; the precipitate obtained is recovered and said precipitate is calcined; and in which, to prepare said mixture, a zirconium solution is used for which the quantity of base necessary to reach the equivalent point during acid-base quantitative analysis of said solution satisfies the mole ratio condition $OH^-/Zr \leq 1.65$, more particularly $\leq 1.5$.


**Patentansprüche**

1.  Verwendung bei der Herstellung eines katalytischen Systems für die Behandlung der Abgase von mit schwefelhaltigem Brennstoff arbeitenden Verbrennungsmotoren zur Stabilisierung der Sauerstoff-Speicherkapazität des Systems gegenüber Schwefel von einer Zusammensetzung auf Basis eines Ceroxids und eines Zirkonoxids in einem Atomverhältnis Cer/Zirkonium von zumindest 1 und wenigstens eines Oxids, ausgewählt unter Praseodymoxid und Lanthanoxid, die nach sechsstündiger Kalzinierung bei 900°C eine spezifische Oberfläche von zumindest 40$m^2/g$ besitzt.

**2.** Verwendung gemäß Anspruch 1, **dadurch gekennzeichnet, daß** die Zusammensetzung nach sechsstündiger Kalzinierung bei 900°C eine spezifische Oberfläche von zumindest 45 m$^2$/g besitzt.

**3.** Verwendung gemäß einem der vorhergehenden Ansprüche, **dadurch gekennzeichnet, daß** die Zusammensetzung nach sechsstündiger Kalzinierung bei 1000°C eine spezifische Oberfläche von zumindest 14 m$^2$/g und vorzugsweise zumindest 20 m$^2$/g und bevorzugter zumindest 30 m$^2$/g besitzt.

**4.** Verwendung gemäß einem der vorhergehenden Ansprüche, **dadurch gekennzeichnet, daß** die Zusammensetzung der Formel $Ce_xZr_yM_zO_2$ entspricht, worin M zumindest ein Element, ausgewählt unter Lanthan und Praseodym bedeutet, und worin z größer als 0 ist und zwischen 0 und 0,3 und insbesondere zwischen 0,02 und 0,2 liegt, und das Verhältnis x/y zwischen 1 und 19, vorzugsweise zwischen 1 und 9, und bevorzugter zwischen 1,5 und 4 liegt, wobei die von 0 verschiedenen Grenzwerte eingeschlossen sind, und x, y und z der Beziehung x+y+z=1 genügen.

**5.** Verwendung gemäß einem der vorhergehenden Ansprüche, **dadurch gekennzeichnet, daß** die Zusammensetzung in Form einer festen Lösung vorliegt.

**6.** Verwendung gemäß einem der vorhergehenden Ansprüche, **dadurch gekennzeichnet, daß** die Zusammensetzung erhalten wird durch ein Verfahren, bei dem man ein Gemisch in flüssigem Milieu herstellt, das eine Cerverbindung, eine Zirkoniumverbindung und eine Lanthan- oder Praseodymverbindung enthält; man das Gemisch erhitzt; man den erhaltenen Niederschlag gewinnt und diesen Niederschlag kalziniert; und bei dem man zur Herstellung des vorstehenden Gemisches eine Zirkoniumlösung verwendet, die derart beschaffen ist, daß die Menge an Base, die bei einer Säure-Basen-Bestimmung dieser Lösung zur Erreichung des Äquivalenzpunktes erforderlich ist, die Bedingung hinsichtlich des Molverhältnisses OH$^-$/Zr $\leq$ 1,65, insbesondere $\leq$ 1,5, erfüllt.